# EUROPÄISCHE PATENTSCHRIFT

(11) **EP 1 709 868 B1**
(45) Veröffentlichungstag und Bekanntmachung des Hinweises auf die Patenterteilung: **16.04.2008**
(21) Anmeldenummer: 06006343.5
(22) Anmeldetag: 28.03.2006
(51) Int. Cl.: A01K 5/00

(54) **Vorrichtung zum Mischen und Verteilen von Schüttgütern**
Apparatus for mixing and distributing bulk products
Dispositif à mélanger et distribuer des produits en vrac

(30) Priorität: 09.04.2005 DE 102005016357
(43) Veröffentlichungstag der Anmeldung: 11.10.2006
(73) Patentinhaber: Maschinenfabrik Bernard van Lengerich GmbH & Co., 48488 Emsbüren (DE)
(72) Erfinder: Van Lengerich, Bernard, 48488 Emsbüren (DE); Altgilbers, Bernhard, 48488 Emsbüren (DE)
(74) Vertreter: Pott, Ulrich

(56) Entgegenhaltungen:
- EP-A- 0 404 028
- DE-U1- 20 103 118
- GB-A- 2 008 373

## Beschreibung

Die Erfindung bezieht sich auf eine Vorrichtung zum Mischen und Verteilen von Schüttgütern, insbesondere von kurz- und langfasrigem Silagegut, mit einem Behälter zur Aufnahme von Schüttgut, der vorzugsweise ein in eine Rotationsbewegung versetzbares Förder- und Mischelement sowie zumindest eine Austragöffnung aufweist.

Vorrichtungen zum Mischen und Verteilen von Schüttgütern der vorgenannten Art sind allgemein bekannt. So sind sie beispielsweise in einer Ausgestaltung als Futtermischwagen bekannt, bei dem innerhalb eines Behälters eine stehende Welle angeordnet ist. Das fasrige Silagegut wird von oben in den Behälter eingegeben, von der Verteilwelle erfaßt, bearbeitet und dann einer Austragöffnung zugeführt, der ein Förderband zum Ausbringen des bearbeiteten Silagegutes in einen Futtergang nachgeordnet ist.

In vielen Anwendungsfällen steht jedoch ein derartiger Futtergang nicht zur Verfügung. Vielmehr sind Anwendungsfälle vorhanden, wo Stalleinbauten es erforderlich machen, das eingefüllte Gut über ein Hindernis hinweg auszubringen, was mit den bekannten Futtermischwagen nicht möglich ist.

Aus der EP-A-0 404 028 ist eine Vorrichtung der eingangs genannten Art bekannt, bei der zusätzlich eine Gebläsevorrichtung mit einem Auswurfelement vorgesehen ist, um Futter auszubringen. Diese ist über einen Kanal mit dem Behälterinneren verbunden, womit das Risiko einhergeht, daß es in diesem Kanal zu Verstopfungen kommt.

Es ist Aufgabe der vorliegenden Erfindung, eine Vorrichtung zum Mischen und Verteilen von Schüttgütern der eingangs genannten Art zu schaffen, mit der zum einen Füllgut auch über Hindernisse hinaus bewegt ausgebracht werden kann, bei der aber darüber hinaus ein Verstopfungsrisiko minimiert ist.

Zur Lösung dieser Aufgabe zeichnet sich die Vorrichtung zum Mischen und Verteilen von Schüttgütern der eingangs genannten Art dadurch aus, daß der Austragöffnung eine Gebläsevorrichtung mit einem Auswurfelement zugeordnet ist und daß der Gebläsevorrichtung eine zum Behälterinneren hin offene Ansaughaube vorgeordnet ist.

Damit ist eine Vorrichtung zum Mischen und Verteilen von Schüttgütern zur Verfügung gestellt, bei der mittels der Gebläsevorrichtung das zu entnehmende Füllgut angesaugt und dann über das Auswurfelement ausgebracht werden kann. Dieses Auswurfelement kann nach Art eines Auswurfkrümmers, wie er beispielsweise von landwirtschaftlichen Erntemaschinen wie Häckslern und Mähdreschern bekannt ist, ausgebildet sein, und das auszubringende Gut auch über höhere Hindernisse hinweg ausbringen.

Die Gebläsevorrichtung kann sich unmittelbar an eine entsprechende Austragöffnung in einer Behälterwandung anschließen. Der Austragöffnung ist zum Behälterinneren die Ansaughaube vorgeordnet. Mittels dieser Ansaughaube ist ein definierter Ansaugquerschnitt darzustellen, und zwar dergestalt, daß die Ansaugöffnung vom Behälterboden aus zugänglich ist, so daß die Ansaugöffnung zum Boden weist. Damit ist sichergestellt, daß das von oben auf das z.B. als Schnecke ausgebildete Rotationselement gegebene Füllgut sicher bearbeitet werden kann, dieses Füllgut im Bereich des Behälterbodens von der Ansaugkraft der Gebläsevorrichtung erfaßt und über das Auswurfelement weiter befördert werden kann. Dabei ist das Verstopfungsrisiko minimiert.

Besonders günstige Ansaugquerschnitte der Ansaughaube in Relation zu der Querschnittsfläche der Eintrittsöffnung der Gebläsevorrichtung sind in Unteransprüchen angegeben.

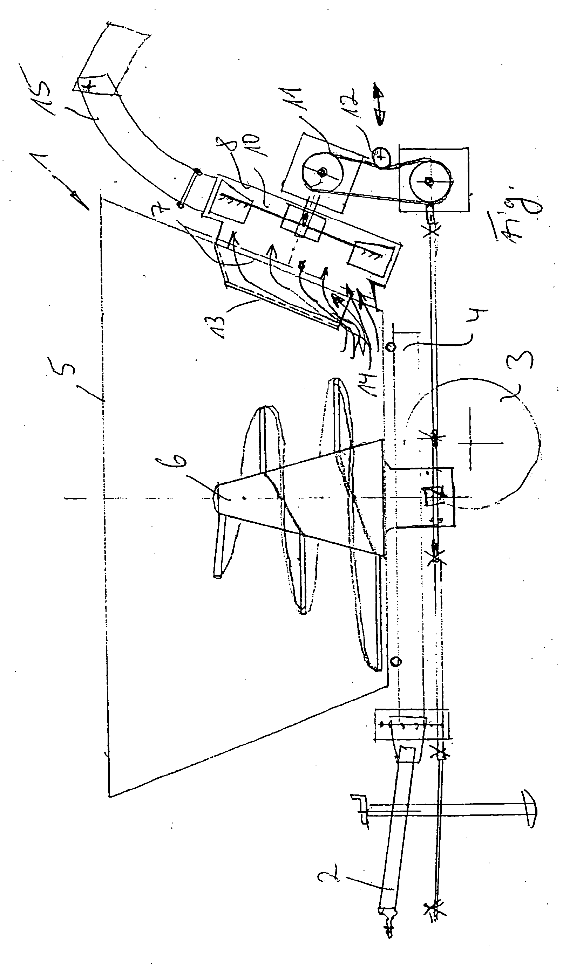

Weitere vorteilhafte Ausgestaltungen ergeben sich aus der Beschreibung und der Zeichnung. In der Zeichnung zeigt die einzige Figur eine schematische Querschnittsdarstellung eines Ausführungsbeispiels einer Vorrichtung nach der Erfindung.

Die Vorrichtung zum Mischen und Verteilen von Schüttgütern ist in dem veranschaulichten Ausführungsbeispiel als Futtermischwagen 1 mit einer Zugdeichsel 2, Rädern 3 und einem Fahrgestell 4 ausgebildet. Dieser Futtermischwagen hat einen Behälter 5, in dessen Inneren eine senkrecht stehende Förderwelle 6 als Misch- und Verteilwerkzeug vorgesehen ist. Im rückwärtigen Bereich des Körpers ist eine allgemeine mit 7 bezifferte Austragöffnung vorgesehen, der eine Gebläsevorrichtung 8 zugeordnet ist. Diese Gebläsevorrichtung ist an der Außenwandung des Behälterkörpers adaptiert und hat ein Gebläserad 10, das von einem Keilriemenantrieb 11 anzutreiben ist. Mittels einer Spannrolle 12 ist dieser Keilriemen vorzuspannen, so daß der ansonsten auf Schlupf gehaltene Keilriemen 11 auch die Schrägausrichtung der Eingangswelle der Gebläsevorrichtung 8 antriebswirksam mitmachen kann.

Im Inneren des Behälters 5 ist die Austragöffnung 7 von einer Ansaughaube 13 bedeckt, die eine nach unten hinweisende Öffnung 14 aufweist. Die Querschnittsfläche dieser Ansaughaube 13 ist im Hinblick auf die Querschnittsfläche des Gebläseeintritts optimiert, um möglichst effektiv eingefülltes Silagegut zu erfassen und ausbringen zu können. Das Auswurfelement 15, das in dem gezeigten Ausführungsbeispiel als Auswurfkrümmer vorgesehen ist, kann beispielsweise auch schwenkbar ausgebildet sein. Ansonsten verschließt die Haube 13 die Austragöffnung des Behälters 5 vollständig. Durch die allein untere Öffnung ist es beispielsweise auch nicht möglich, daß beispielsweise irrtümlich in den Behälter 5 gelangte Werkzeuge, Stiele u.dgl. in die Gebläseöffnung gelangen können.

## Patentansprüche

1. Vorrichtung zum Mischen und Verteilen von Schüttgütern, insbesondere von kurz- und langfaserigem Silagegut, mit einem Behälter zur Aufnahme von Schüttgut, der vorzugsweise ein in eine Rotationsbewegung versetzbares Förder- und Mischelement (6) sowie zumindest eine Austragöffnung (7) aufweist, wobei der Austragöffnung (7) eine Gebläsevorrichtung (8) mit einem Auswurfelement (15) zugeordnet ist, **dadurch gekennzeichnet, daß** der Gebläsevorrichtung (8) eine zum Behälterinneren hin offene Ansaughaube (13) vorgeordnet ist.

2. Vorrichtung nach Anspruch 1, **dadurch gekennzeichnet, daß** die Ansaughaube (13) eine zum Boden des Behälters (5) hin ausgerichtete Zuführöffnung (14) aufweist und ansonsten geschlossen ausgebildet ist.

3. Vorrichtung nach einem der Ansprüche 1 oder 2, **dadurch gekennzeichnet, daß** die Gebläsevorrichtung (8) an eine Seitenwandung des Behälters (5) adaptier- und über einen Keilriemenantrieb (11) antreibbar ist.

4. Vorrichtung nach Anspruch 3, **dadurch gekennzeichnet, daß** der Keilriemenantrieb (11) von einer Spannrolle (12) beaufschlagbar ist.

5. Vorrichtung nach einem der Ansprüche 2 bis 4, **dadurch gekennzeichnet, daß** der Querschnitt der Gebläseeintrittsöffnung größer ist als der Querschnitt der Zufuhröffnung (14) der Ansaughaube (13).

6. Vorrichtung nach Anspruch 5, **dadurch gekennzeichnet, daß** die Austragöffnung der Querschnittsfläche der Zuführöffnung (14) der Ansaughaube (13) 25% - 70% der Querschnittsfläche der Gebläseeintrittsöffnung ist.

7. Vorrichtung nach Anspruch 6, **dadurch gekennzeichnet, daß** die Querschnittsfläche der Ansaughaube (13) etwa der Hälfte der Querschnittsfläche der Gebläseeintrittsöffnung entspricht.

8. Vorrichtung nach einem der Ansprüche 5 bis 7, **dadurch gekennzeichnet, daß** die Ansaughaube (13) aus dem Behälterinneren nach außen verschwenkbar gehaltert ist.

## Claims

1. Apparatus for mixing and distributing bulk products and in particular short-fibred and long-fibred silage, having a container to receive bulk products which preferably has a feeding and mixing element (6) able to be set in motion in rotation and at least one outlet opening (7), the outlet opening (7) having associated with it a blower arrangement (8) having a discharge element (15), **characterised in that** the blower arrangement (8) has positioned upstream of it a suction hood (13) which is open towards the interior of the container.

2. Apparatus according to claim 1, **characterised in that** the suction hood (13) has an infeed opening (14) directed towards the floor of the container (5) and is of a form which is otherwise solid.

3. Apparatus according to either of claims 1 and 2, **characterised in that** the blower arrangement (8) can be adapted to a side-wall of the container (5) and can be driven by means of a vee-belt drive (11).

4. Apparatus according to claim 3, **characterised in that** the vee-belt drive (11) can have a tensioning roller (12) applied to it.

5. Apparatus according to one of claims 2 to 4, **characterised in that** the cross-section of the entry opening to the blower is larger than the cross-section of the infeed opening (14) to the suction hood (13).

6. Apparatus according to claim 5, **characterised in that** the outlet opening from the cross-sectional area of the infeed opening (14) to the suction hood (13) is 25% - 70% of the cross-sectional area of the entry opening to the blower.

7. Apparatus according to claim 6, **characterised in that** the cross-sectional area of the suction hood (13) is approximately half the cross-sectional area of the entry opening to the blower.

8. Apparatus according to one of claims 5 to 7, **characterised in that** the suction hood (13) is mounted in such a way as to be pivotable outwards from the interior of the container.

## Revendications

1. Dispositif pour mélanger et distribuer des produits en vrac, notamment des produits d'ensilage à fibres courtes et longues, comprenant un réservoir pour recevoir les produits en vrac, comportant, de préférence, un élément de transfert et de mélange (6) mis en mouvement de rotation ainsi qu'au moins un orifice de sortie (7), cet orifice de sortie (7) étant combiné à un dispositif à machine soufflante (8) muni d'un élément éjecteur (15),
**caractérisé en ce que**
le dispositif à machine soufflante (8) a en amont un capot d'aspiration (13) ouvert du côté intérieur du réservoir.

2. Dispositif selon la revendication 1,
**caractérisé en ce que**
le capot d'aspiration (13) comporte un orifice d'alimentation (14) dirigé vers le fond du réservoir (5) et, par ailleurs, le capot est fermé.

3. Dispositif selon l'une des revendications 1 ou 2,
**caractérisé en ce que**
le dispositif à machine soufflante (8) est adapté à une paroi latérale du réservoir (5) et est entraîné par un moyen d'entraînement à courroie trapézoïdale (11).

4. Dispositif selon la revendication 3,
**caractérisé en ce que**
moyen d'entraînement à courroie trapézoïdale (11) est sollicité par un galet tendeur (12).

5. Dispositif selon l'une des revendications 2 à 4,
**caractérisé en ce que**
la section de l'orifice d'entrée de la machine soufflante est plus grande que la section de l'orifice d'alimentation (14) du capot d'aspiration (13).

6. Dispositif selon la revendication 5,
**caractérisé en ce que**
l'orifice de sortie de la surface de section de l'orifice d'alimentation (14) du capot d'aspiration (13) représente entre 25 et 70 % de la surface de la section de l'orifice d'entrée de la machine soufflante.

7. Dispositif selon la revendication 6,
**caractérisé en ce que**
la surface de la section du capot d'aspiration (13) correspond sensiblement à la moitié de la surface de la section de l'orifice d'entrée de la machine soufflante.

8. Dispositif selon l'une des revendications 5 à 7,
**caractérisé en ce que**
le capot d'aspiration (13) est tenu de manière pivotante vers l'extérieur, à partir de l'intérieur du réservoir.
